# EUROPEAN PATENT APPLICATION

(11) **EP 4 640 726 A1**
(43) Date of publication of application: **29.10.2025**
(21) Application number: 23906510.5
(22) Date of filing: 09.11.2023
(51) Int. Cl.: C08G 18/00, B32B 7/12, B32B 27/40, C08G 18/48, C08G 18/76, C08K 5/42, C08L 75/04, C09J 175/08, D06N 3/14

(54) **AQUEOUS URETHANE RESIN COMPOSITION, SYNTHETIC LEATHER AND METHOD FOR PRODUCING AQUEOUS URETHANE RESIN COMPOSITION**

(30) Priority: 20.12.2022 JP 2022203101
(71) Applicant: DIC Corporation, Tokyo 174-8520 (JP)
(72) Inventor: NONAKA, Ryo, Takaishi-shi, Osaka 592-0001 (JP); UEGUCHI, Miwa, Takaishi-shi, Osaka 592-0001 (JP); TETSUI, Tomohiro, Takaishi-shi, Osaka 592-0001 (JP); MAEDA, Ryo, Takaishi-shi, Osaka 592-0001 (JP)
(74) Representative: Kraus & Lederer PartGmbB
(86) International application number: PCT/JP2023/040323
(87) International publication number: WO 2024/135139

(57) **Abstract**

The present invention provides an aqueous urethane resin composition containing a urethane resin (A), an aqueous medium (B), and an emulsifier (C), in which the urethane resin (A) contains, as essential raw materials, a polyol compound (a1) containing a nonionic polyol, and an aromatic polyisocyanate compound (a2), and a urea bond concentration in the urethane resin (A) is 100 mmol/kg or less, a synthetic leather including an adhesive layer formed of the aqueous urethane resin composition, and a method for producing the aqueous urethane resin composition. The aqueous urethane resin composition has a long pot life and excellent peel strength and light resistance.

## Description

### TECHNICAL FIELD

The present invention relates to an aqueous urethane resin composition, a synthetic leather, and a method for producing an aqueous urethane resin composition.

### BACKGROUND ART

An aqueous urethane resin composition can reduce volatile organic substances as compared with a solvent-based urethane resin composition in the related art, and thus application of the aqueous urethane resin composition to various uses such as an artificial leather, a synthetic leather, a coating agent, a glove coating and a glove film, and an adhesive as an environmentally friendly material has been studied in recent years.

Among them, an aqueous polyurethane resin-based adhesive containing an aqueous polyurethane resin (PUD) having a softening temperature of 50°C or lower and a melt viscosity of 60000 Pa·s or less at 50°C and a polyisocyanate compound is known for use in an adhesive layer of a synthetic leather (see, for example, Patent Document 1). However, a two-part adhesive in which a PUD main agent and an isocyanate crosslinking agent are combined has a short usable time (pot life) of the blended liquid, and thus it is difficult to perform stable processing, which is a problem.

Accordingly, a material having a long pot life and excellent peel strength and light resistance has been demanded.

### CITATION LIST

### PATENT LITERATURE

Patent Document 1: JP 2000-108289 A

### SUMMARY OF INVENTION

### TECHNICAL PROBLEM

The problem to be solved by the present invention is to provide an aqueous urethane resin composition having a long pot life and excellent peel strength and light resistance, a synthetic leather including an adhesive layer formed of the aqueous urethane resin composition, and a method for producing the aqueous urethane resin composition.

### SOLUTION TO PROBLEM

As a result of intensive studies to solve the above problem, the present inventors have found that the problem can be solved by using an aqueous urethane resin composition containing a specific urethane resin and an aqueous medium, and have completed the present invention.

That is, the present invention relates to an aqueous urethane resin composition containing a urethane resin (A), an aqueous medium (B), and an emulsifier (C), wherein the urethane resin (A) contains, as essential raw materials, a polyol compound (a1) containing a nonionic polyol, and an aromatic polyisocyanate compound (a2), and a urea bond concentration in the urethane resin (A) is 100 mmol/kg or less.

### ADVANTAGEOUS EFFECTS OF INVENTION

The aqueous urethane resin composition of the present invention has a long pot life and excellent peel strength and light resistance, and thus can be used as a coating agent or an adhesive. In particular, the aqueous urethane resin composition can be suitably used for an adhesive layer of a synthetic leather.

### DESCRIPTION OF EMBODIMENTS

An aqueous urethane resin composition of the present invention is characterized by containing a urethane resin (A), an aqueous medium (B), and an emulsifier (C).

The urethane resin (A) contains a polyol compound (a1) including a nonionic polyol and an aromatic polyisocyanate compound (a2) as essential raw materials.

Examples of the nonionic polyol include a compound having an oxyethylene structure. These nonionic polyols may be used alone or in combination of two or more thereof. Among them, a compound having an oxyethylene structure is preferable because an aqueous urethane resin composition having a long pot life and excellent peel strength and light resistance is obtained.

Examples of the compound having an oxyethylene structure include polyether polyols having an oxyethylene structure such as polyethylene glycol, polyoxyethylene polyoxypropylene glycol, polyoxyethylene polyoxytetramethylene glycol, and polyethylene glycol dimethyl ether. These compounds having an oxyethylene structure may be used alone or in combination of two or more thereof. Among them, polyethylene glycol and polyethylene glycol dimethyl ether are preferable because an aqueous urethane resin composition having a long pot life and excellent peel strength and light resistance is obtained.

The number average molecular weight of the nonionic polyol is preferably in a range of 200 to 10000, more preferably in a range of 300 to 3000, and even more preferably in a range of 300 to 2000 because an aqueous urethane resin composition having a long pot life and excellent peel strength and light resistance is obtained. Note that in the present invention, the number average molecular weight is a value as measured by a gel permeation chromatography (GPC) method.

The proportion of the nonionic polyol used is preferably in a range of 1 to 30 mass%, and more preferably in a range of 2 to 10 mass% in the polyol compound (a1) because an aqueous urethane resin composition having a long pot life and excellent peel strength and light resistance is obtained.

As the polyol compound (a1), a polyol other than the nonionic polyol (hereinafter, referred to simply as "the other polyol compound") may be used, as necessary.

Examples of the other polyol compound include polyether polyol, polyester polyol, polyacryl polyol, polycarbonate polyol, and polybutadiene polyol, other than the nonionic polyol. These other polyol compounds may be used alone or in combination of two or more thereof. Among them, polyether polyol, polyester polyol, and polycarbonate polyol are preferable because an aqueous urethane resin composition having a long pot life and excellent peel strength and light resistance is obtained.

Examples of the aromatic polyisocyanate compound (a2) include phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate. These aromatic polyisocyanate compounds may be used alone or in combination of two or more thereof. Among them, toluene diisocyanate is preferable because an aqueous urethane resin composition having a long pot life and excellent peel strength and light resistance is obtained.

As necessary, a polyisocyanate compound besides the aromatic polyisocyanate compound (a2) (hereinafter, referred to simply as "the other polyisocyanate compound") may be used in combination.

Examples of the other polyisocyanate compound include: aliphatic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate; and alicyclic diisocyanates such as norbornane diisocyanate, isophorone diisocyanate, hydrogenated xylylene diisocyanate, and hydrogenated diphenylmethane diisocyanate. These other polyisocyanate compounds may be used alone or in combination of two or more thereof.

Examples of the emulsifier (C) include: nonionic emulsifiers such as polyoxyethylene nonylphenyl ether, polyoxyethylene lauryl ether, polyoxyethylene styrylphenyl ether, polyoxyethylene sorbitol tetraoleate, and polyethylene/polypropylene copolymer; anionic emulsifiers such as fatty acid salts such as sodium oleate, alkyl sulfate salts, alkylbenzenesulfonates, alkylsulfosuccinates, naphthalenesulfonates, polyoxyethylene alkylsulfates, sodium alkanesulfonates, and sodium alkyldiphenylether sulfonates; and cationic emulsifiers such as alkylamine salts, alkyltrimethylammonium salts, and alkyldimethylbenzylammonium salts. These emulsifiers may be used alone or in combination of two or more thereof. Among them, anionic emulsifiers are preferable because an aqueous urethane resin composition having a long pot life and excellent peel strength, light resistance, and storage stability is obtained.

The amount of the emulsifier (C) used is preferably 10 parts by mass or less, and more preferably in a range of 0.5 to 5 per 100 parts by mass of the urethane resin (A) because an aqueous urethane resin composition having a long pot life and excellent peel strength, light resistance, and storage stability is obtained.

The urea bond concentration of the urethane resin (A) is 100 mmol/kg or less, and is preferably 50 mmol/kg or less, more preferably 30 mmol/kg or less, and particularly preferably 0 mmol/kg because an aqueous urethane resin composition having a long pot life and excellent peel strength and light resistance is obtained.

The average particle size of the urethane resin (A) is preferably in a range of 0.01 to 1 µm and more preferably in a range of 0.05 to 0.9 µm because an aqueous urethane resin composition having a long pot life and excellent peel strength and light resistance is obtained. Note that in the present invention, a method for measuring the average particle size will be described in Examples described below.

As the urethane resin (A), as necessary, a chain extender having no amino group may be used in addition to the polyol compound (a1) and the aromatic polyisocyanate compound (a2). In particular, a chain extender having a hydroxyl group is preferably used because an aqueous urethane resin composition having a long pot life and excellent peel strength and light resistance is obtained.

Examples of the chain extender having a hydroxyl group include chain extenders having a hydroxyl group such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane. These chain extenders may be used alone or in combination of two or more thereof. Among them, an aliphatic polyol compound is preferably used from the viewpoint of easily suppressing discoloration and obtaining more excellent light resistance.

A method for producing the urethane resin (A) is not particularly limited, and the urethane resin (A) may be produced by any method. For example, the urethane resin (A) may be produced by a method in which all reaction raw materials containing the polyol compound (a1) and the aromatic polyisocyanate compound (a2) are reacted at once, or may be produced by a method in which the reaction raw materials are sequentially reacted. These reactions are preferably performed, for example, at a temperature of 50 to 100°C for 3 to 10 hours.

The molar ratio [(isocyanate group)/(hydroxyl group)] of the total number of moles of the hydroxyl group contained in the polyol (a1) and the hydroxyl group contained in the chain extender and the number of moles of the isocyanate group contained in the aromatic polyisocyanate (a2) is preferably in a range of 0.80 to 0.95, and more preferably in a range of 0.85 to 0.94.

When the urethane resin (A) is produced, an organic solvent may be used.

Examples of the organic solvent include: ketone compounds such as acetone and methyl ethyl ketone; ether compounds such as tetrahydrofuran and dioxane; acetic acid ester compounds such as ethyl acetate and butyl acetate; nitrile compounds such as acetonitrile; and amide compounds such as dimethylformamide and N-methylpyrrolidone. These organic solvents may be used alone, or in combination of two or more thereof. Note that the organic solvent is preferably removed by a distillation method or the like when the aqueous urethane resin composition is obtained.

The weight average molecular weight of the urethane resin (A) is preferably in a range of 2000 to 150000, more preferably in a range of 4000 to 100000, even more preferably in a range of 6000 to 70000, and particularly preferably in a range of 8000 to 50000 because the aqueous urethane resin composition having a long pot life and excellent peel strength and light resistance is obtained. Note that the weight average molecular weight of the urethane resin (A) is a value obtained by measurement in the same manner as the number average molecular weight of the polyol (a1).

Examples of the aqueous medium (B) include ion-exchanged water and distilled water. These aqueous mediums may be used alone or in combination of two or more thereof.

A method for producing the aqueous urethane resin composition of the present invention is not particularly limited, and the aqueous urethane resin composition may be produced by any method. For example, there is exemplified a method in which the urethane resin (A) and the aqueous medium (B) are mixed.

Examples of the method of mixing the urethane resin (A) and the aqueous medium (B) include a method in which mixing is performed using a reactor equipped with a stirring blade; a kneading machine such as a kneader, a continuous kneader, a taper roll, a single-screw extruder, a twin-screw extruder, a triple-screw extruder, a universal mixer, PLASTOMILL, or a Bodeda kneading machine; a rotary dispersion mixing machine such as a homomixer, a static mixer, FILMIX, Ebara Milder, CLEARMIX, ULTRA-TURRAX, CAVITRON, or BIO-MIXER; an ultrasonic dispersion apparatus; or an apparatus having no moving portion and capable of mixing by the flow of a fluid itself, such as an in-line mixer.

The mass ratio [(A)/(B)] of the urethane resin (A) to the aqueous medium (B) is preferably in a range of 50/50 to 80/20 and more preferably in a range of 50/50 to 70/30 because an aqueous urethane resin composition having a long pot life and excellent peel strength and light resistance is obtained.

The aqueous urethane resin composition of the present invention may contain another additive, as necessary.

Examples of the other additive include a surfactant, a thickener, a urethanization catalyst, a filler, a pigment, a dye, a flame retardant, a leveling agent, and an antiblocking agent. These additives may be used alone or in combination of two or more thereof. Note that when the urethane resin (A) is produced, it is preferable that an organic solvent is not substantially contained, but an organic solvent may be added as an additive.

Examples of the surfactant include: nonionic surfactants such as polyoxyethylene nonylphenyl ether, polyoxyethylene lauryl ether, polyoxyethylene styrylphenyl ether, polyoxyethylene sorbitol tetraoleate, and polyethylene/polypropylene copolymer; anionic surfactants such as fatty acid salts such as sodium oleate, alkyl sulfate salts, alkylbenzenesulfonates, alkylsulfosuccinates, naphthalenesulfonates, polyoxyethylene alkylsulfates, sodium alkanesulfonates, and sodium alkyldiphenylether sulfonates; and cationic surfactants such as alkylamine salts, alkyltrimethylammonium salts, and alkyldimethylbenzylammonium salts.

Examples of the thickener include an associative thickener and an acid-based thickener.

Examples of the urethanization catalyst include an organotin-based catalyst and a bismuth-based catalyst.

Examples of the filler include calcium carbonate and silica.

Examples of the pigment include carbon black.

Examples of the dye include an azo-based dye.

Examples of the flame retardant include a phosphorus-based flame retardant.

Examples of the leveling agent include a silicon-based leveling agent.

Examples of the antiblocking agent include an acrylic antiblocking agent and a cellulose ester.

A synthetic leather of the present invention includes at least a base fabric (i), an adhesive layer (ii), and a skin layer (iii), and examples thereof include configurations of the following synthetic leathers (1) to (4).

Synthetic leather (1): a base fabric (i), an adhesive layer (ii), and a skin layer (iii)
Synthetic leather (2): a base fabric (i), an adhesive layer (ii), an intermediate layer, and a skin layer (iii)
Synthetic leather (3): a base fabric (i), a porous layer, an adhesive layer (ii), and a skin layer (iii)
Synthetic leather (4): a base fabric (i), a porous layer, an adhesive layer (ii), an intermediate layer, and a skin layer (iii)

Examples of the base fabric (i) include nonwoven fabrics, woven fabrics, and knitted fabrics made of polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, blended fibers thereof, or the like.

As the adhesive layer (ii), one formed of the aqueous urethane resin composition of the present invention is used, and the thickness of the adhesive layer (ii) is, for example, in a range of 30 to 60 µm.

Examples of the material for forming the skin layer (iii) (hereinafter, sometimes referred to as "skin layer-forming resin") include known aqueous urethane resins, solvent-based urethane resins, solventless urethane resins, aqueous acrylic resins, silicone resins, polypropylene resins, and polyester resins. These materials may be used alone or in combination of two or more thereof.

As the porous layer, a layer formed of a solvent-based urethane resin composition by a known wet film-forming method; a layer obtained by making an aqueous urethane resin composition porous by a known method; or the like can be used.

Examples of the material for forming the intermediate layer include known aqueous urethane resins, solvent-based urethane resins, solventless urethane resins, aqueous acrylic resins, silicone resins, polypropylene resins, and polyester resins. These materials may be used alone or in combination of two or more thereof.

A method for producing the synthetic leather is not particularly limited, and the synthetic leather may be produced by any method. For example, there are exemplified a method (1) in which a skin layer-forming resin is applied on a release-treated base material and dried to obtain a skin layer (iii), then the aqueous urethane resin composition of the present invention is applied on the skin layer (iii) and dried to form an adhesive layer (ii), and then the adhesive layer (ii) is bonded to a base fabric (i); and a method (2) in which a skin layer-forming resin is applied on a release-treated base material and dried to obtain a skin layer (iii), and then the aqueous urethane resin composition of the present invention is applied on the skin layer (iii) and bonded to a base fabric (i), followed by drying to form an adhesive layer (ii); and the like.

Examples of the method for applying the skin layer-forming resin and the aqueous urethane resin composition include methods using an applicator, a roll coater, a spray coater, a T-die coater, a knife coater, a comma coater, or the like.

After the synthetic leather is produced, it may be aged at 30 to 100°C for 1 to 10 days, for example, as necessary.

### EXAMPLES

The present invention will be specifically described with reference to Examples and Comparative Examples below. Note that the present invention is not limited to the following Examples.

### Example 1: Preparation of aqueous urethane resin composition (1)

In a four-necked flask equipped with a stirrer, a reflux condenser, a thermometer, and a nitrogen introduction tube, 1000 parts by mass of polyether polyol ("PTMG1000" available from Mitsubishi Chemical Corporation, number average molecular weight: 1000, hereinafter referred to simply as "PTMG1000"), 61 parts by mass of methoxypolyethylene glycol ("UNIOX M1000" available from NOF CORPORATION, number average molecular weight: 1000, hereinafter referred to simply as "MPEG"), and 163 parts by mass of toluene diisocyanate (hereinafter referred to simply as "TDI") were reacted at 120°C for 3 hours under a nitrogen gas stream to obtain a urethane resin (1) ([NCO]/[OH] ratio: 0.90). Next, the urethane resin (1) heated to 70°C, 141 parts by mass of a 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (1) having a urethane resin content of 50 mass%. The urea bond group concentration in the aqueous urethane resin composition (1) was 0 mmol/kg.

### Example 2: Preparation of aqueous urethane resin composition (2)

In a four-necked flask equipped with a stirrer, a reflux condenser, a thermometer, and a nitrogen introduction tube, 1000 parts by mass of "PTMG1000", 61 parts by mass of polyethylene glycol ("PEG #600" available from NOF CORPORATION, number average molecular weight: 600, hereinafter referred to simply as "PEG"), and 174 parts by mass of TDI were reacted at 120°C for 3 hours under a nitrogen gas stream to obtain a urethane resin (2) ([NCO]/[OH] ratio: 0.90). Next, the urethane resin (2) heated to 70°C, 141 parts by mass of a 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (2) having a urethane resin content of 50 mass%. The urea bond group concentration in this aqueous urethane resin composition (2) was 0 mmol/kg.

### Example 3: Preparation of aqueous urethane resin composition (3)

In a four-necked flask equipped with a stirrer, a reflux condenser, a thermometer, and a nitrogen introduction tube, 1000 parts by mass of "PTMG1000", 67 parts by mass of "MPEG", 106 parts by mass of 1,4-butanediol (hereinafter referred to simply as "1,4BG"), and 347 parts by mass of TDI were reacted at 120°C for 3 hours under a nitrogen gas stream to obtain a urethane resin (3) ([NCO]/[OH] ratio: 0.90). Next, the urethane resin (3) heated to 70°C, 141 parts by mass of a 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (3) having a urethane resin content of 50 mass%. The urea bond group concentration in this aqueous urethane resin composition (3) was 0 mmol/kg.

### Example 4: Preparation of aqueous urethane resin composition (4)

In a four-necked flask equipped with a stirrer, a reflux condenser, a thermometer, and a nitrogen introduction tube, 1000 parts by mass of "PTMG1000", 61 parts by mass of "MPEG", 5 parts by mass of isophorone diamine (hereinafter referred to simply as "IPDA"), and 168 parts by mass of TDI were reacted at 120°C for 3 hours under a nitrogen gas stream to obtain a urethane resin (4) ([NCO]/[OH] ratio: 0.90). Next, the urethane resin (4) heated to 70°C, 141 parts by mass of a 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (4) having a urethane resin content of 50 mass%. The urea bond group concentration in this aqueous urethane resin composition (4) was 48 mmol/kg.

### Example 5: Preparation of aqueous urethane resin composition (5)

In a four-necked flask equipped with a stirrer, a reflux condenser, a thermometer, and a nitrogen introduction tube, 1000 parts by mass of polycarbonate polyol ("ETERNACOL PH-200D" available from Ube Industries, Ltd., number average molecular weight: 2000), 75 parts by mass of "MPEG", and 84 parts by mass of TDI were reacted at 120°C for 3 hours under a nitrogen gas stream to obtain a urethane resin (5) ([NCO]/[OH] ratio: 0.90). Next, the urethane resin (5) heated to 70°C, 132 parts by mass of a 35 mass% aqueous solution of sodium alkylnaphthalenesulfonate ("PELEX NBL" available from Kao Corporation), and 290 parts by mass of water were mixed, and then water was further added to finally obtain an aqueous urethane resin composition (5) having a urethane resin content of 50 mass%. The urea bond group concentration in this aqueous urethane resin composition (5) was 0 mmol/kg.

### Example 6: Preparation of aqueous urethane resin composition (6)

In a four-necked flask equipped with a stirrer, a reflux condenser, a thermometer, and a nitrogen introduction tube, 1000 parts by mass of polyester polyol (number average molecular weight: 1000) obtained by reacting 1,4-hexanediol with adipic acid, 61 parts by mass of "MPEG", and 163 parts by mass of **TDI** were reacted at 120°C for 3 hours under a nitrogen gas stream to obtain a urethane resin (6) ([NCO]/[OH] ratio: 0.90). Next, the urethane resin (6) heated to 70°C, 141 parts by mass of a 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (6) having a urethane resin content of 50 mass%. The urea bond group concentration in this aqueous urethane resin composition 6) was 0 mmol/kg.

### Comparative Example 1: Preparation of aqueous urethane resin composition (R1)

Into a four-necked flask equipped with a stirrer, a reflux condenser, a thermometer, and a nitrogen introduction tube, 1000 parts by mass of polypropylene glycol having a hydroxyl value of 56.1 and an average molecular weight of 2000, 47.2 parts by mass of neopentyl glycol, 9.3 parts by mass of trimethylolpropane, 68.6 parts by mass of MPEG, and 588 parts by mass of methyl ethyl ketone were added and uniformly mixed under a nitrogen gas stream. Then, 247 parts by mass of TDI was added and reacted at 70°C for about 4 hours to obtain a solution of an isocyanate-terminated urethane prepolymer in methyl ethyl ketone ([NCO]/[OH] ratio: 1.30). Next, 2450 parts by mass of ion-exchanged water was added to the solution of the urethane prepolymer in methyl ethyl ketone obtained by the above method to emulsify it, and an aqueous solution prepared by dissolving 12.3 parts by mass of 80% hydrazine hydrate and 20.6 parts by mass of diethanolamine in 296 parts by mass of water was further added thereto for chain extension. Then, methyl ethyl ketone was distilled off under reduced pressure to finally obtain an aqueous urethane resin composition (R1) having a urethane resin content of 50 mass%. The urea bond group concentration in this aqueous urethane resin composition (R1) was 578 mmol/kg.

### Comparative Example 2: Preparation of aqueous urethane resin composition (R2)

Into a four-necked flask equipped with a stirrer, a reflux condenser, a thermometer, and a nitrogen introduction tube, 1000 parts by mass of "PTMG1000", 30 parts by mass of 2,2-dimethylolpropionic acid (hereinafter referred to simply as "DMPA"), and 856 parts by mass of methyl ethyl ketone were added and uniformly mixed under a nitrogen gas stream. Thereafter, 234 parts by mass of TDI was added, and then 0.1 parts by mass of dibutyltin dilaurate was added and reacted at 70°C for about 4 hours ([NCO]/[OH] ratio: 1.30). Next, 22 parts by mass of 1,3-butanediol was added and reacted at 70°C for about 1 hour to terminate the reaction, thereby obtaining a solution of a urethane prepolymer in methyl ethyl ketone. Next, 20 parts by mass of N,N-dimethylethanolamine was added to the solution of the urethane prepolymer in methyl ethyl ketone obtained by the above method to neutralize the carboxyl groups in the urethane polymer. Then, 1928 parts by mass of ion-exchanged water was added thereto, and methyl ethyl ketone was distilled off under reduced pressure to finally obtain an aqueous urethane resin composition (R2) having a urethane resin content of 40 mass%. The urea bond group concentration in this aqueous urethane resin composition (R2) was 0 mmol/kg.

### Comparative Example 3: Preparation of aqueous urethane resin composition (R3)

Into a four-necked flask equipped with a stirrer, a reflux condenser, a thermometer, and a nitrogen introduction tube, 1000 parts by mass of "PTMG2000" and 18 parts by mass of PEG were added and uniformly mixed under a nitrogen gas stream. Thereafter, 272 parts by mass of dicyclohexylmethane diisocyanate (hereinafter referred to simply as "HMDI") was added and then 0.1 parts by mass of dibutyltin dilaurate was added and reacted at 70°C for about 4 hours to obtain an isocyanate-terminated urethane prepolymer ([NCO]/[OH] ratio: 1.30). The urethane prepolymer heated to 70°C was mixed with 147 parts by mass of 35 mass% aqueous solution of sodium alkylnaphthalenesulfonate ("PELEX NBL" available from Kao Corporation), and 875 parts by mass of water. Immediately thereafter, an aqueous solution prepared by dissolving 39 parts by mass of isophorone diamine (hereinafter referred to simply as "IPDA") and 15 parts by mass of diethanolamine in 367 parts by mass of water was added thereto for chain extension to finally obtain an aqueous urethane resin composition (R3) having a urethane resin content of 50 mass%. The urea bond group concentration in this aqueous urethane resin composition (R3) was 447 mmol/kg.

### Comparative Example 4: Preparation of aqueous urethane resin composition (R4)

In a four-necked flask equipped with a stirrer, a reflux condenser, a thermometer, and a nitrogen introduction tube, 1000 parts by mass of "PTMG1000", 61 parts by mass of MPEG, and 163 parts by mass of TDI were reacted at 120°C for 3 hours under a nitrogen gas stream to obtain a urethane resin ([NCO]/[OH] ratio: 0.90). The urethane resin heated to 70°C and 309 parts by mass of ion-exchanged water were mixed, but emulsification was not possible, and an aqueous urethane resin composition was not obtained.

### Comparative Example 5: Preparation of aqueous urethane resin composition (R5)

In a four-necked flask equipped with a stirrer, a reflux condenser, a thermometer, and a nitrogen introduction tube, 1000 parts by mass of "PTMG1000", 62 parts by mass of MPEG, 22 parts by mass of IPDA, and 183 parts by mass of TDI were reacted at 120°C for 3 hours under a nitrogen gas stream to obtain a urethane resin (NCO/OH ratio: 0.90). The urethane resin heated to 70°C, 141 parts by mass of 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (R5) having a urethane resin content of 50 mass%. The urea bond group concentration in this aqueous urethane resin composition (R5) was 204 mmol/kg.

### Example 7: Production of synthetic leather (1)

A blended liquid containing 100 parts by mass of an aqueous urethane resin composition for a skin layer ("HYDRAN WLS-250" available from DIC Corporation), 10 parts by mass of a water-dispersible black pigment ("Dirac HS-9530" available from DIC Corporation), and 1 part by mass of an associative thickener ("HYDRAN ASSISTER T10" available from DIC Corporation) was applied onto a flat release paper ("DN-TP-155T" available from Ajinomoto Co., Inc.) in such a manner that the thickness of the film after drying was 30 µm, and dried at 70°C for 2 minutes and further at 120°C for 2 minutes. Next, 14 parts by mass of a polyisocyanate-based crosslinking agent (BURNOCK DNW-5500 available from DIC Corporation) was added to 100 parts by mass of the aqueous urethane resin composition (1) obtained in Example 1, and the mixture was stirred and mixed for 5 minutes to obtain a blended liquid. The blended liquid was applied to have a solid film thickness of 50 µm, and dried at 90°C for 3 minutes. After laminating with a T/R raised fabric, the laminate was heat-treated at 130°C for 10 minutes, and the release paper was peeled off to obtain a synthetic leather.

### Examples 8 to 12: Production of synthetic leathers (2) to (6)

Synthetic leathers (2) to (6) were obtained in the same manner as in Example 7 except that the "aqueous urethane resin composition (1)" used in Example 7 was changed to the aqueous urethane resin compositions (2) to (6) obtained in Examples 2 to 6, respectively.

### Comparative Examples 6 to 9: Production of synthetic leathers (R1) to (R4)

Synthetic leathers (R1) to (R4) were obtained in the same manner as in Example 7 except that the "aqueous urethane resin composition (1)" used in Example 7 was changed to the aqueous urethane resin compositions (R1) to (R3) and (R5) obtained in Comparative Examples 1 to 3 and 5, respectively.

### Method for measuring peel strength

On each of the synthetic leathers obtained in Examples and Comparative Examples, a 2.5 cm-wide hot melt tape ("BW-2" available from San Chemicals, Ltd.) was placed and heated at 150°C for 3 minutes for adhesion. The sample was cut along the width of the hot melt tape. A part of the sample was peeled off, the base material and the hot melt tape were sandwiched between chucks, and the peel strength was measured with an Autograph ("AG-1" available from Shimadzu Corporation) and evaluated in accordance with the following criteria.

A: The peel strength was 3.5 kgf/25 mm or more.
B: The peel strength was 2.5 kgf/25 mm or more and less than 3.5 kgf/25 mm.
C: The peel strength was less than 2.5 kgf/25 mm.

### Method for evaluating pot life

To 100 parts by mass of each of the aqueous urethane resin compositions obtained in Examples and Comparative Examples, 10 parts by mass of a polyisocyanate-based crosslinking agent (BURNOCK DNW-5500 available from DIC Corporation) was added, and the mixture was allowed to stand at 40°C for 4 hours. Thereafter, a synthetic leather was prepared in the same manner as Example 1. On this synthetic leather, a 2.5 cm-wide hot melt tape ("BW-2" available from San Chemicals, Ltd.) was placed and heated at 150°C for 3 minutes for adhesion. Then, the sample was cut along the width of the hot melt tape. A part of the sample was peeled off, the base material and the hot melt tape were sandwiched between chucks, and the peel strength was measured with an Autograph ("AG-1" available from Shimadzu Corporation) and evaluated in accordance with the following criteria.

A: The peel strength was 3.5 kgf/25 mm or more.
B: The peel strength was 2.5 kgf/25 mm or more and less than 3.5 kgf/25 mm.
C: The peel strength was less than 2.5 kgf/25 mm.

### Method for evaluating light resistance

The synthetic leathers obtained in Examples and Comparative Examples were irradiated with light for 100 hours using a fade meter "U48AU" (63°C, humidity 50%) available from Suga Test Instruments Co., Ltd. Thereafter, the synthetic leathers were visually observed and evaluated in accordance with the following criteria.

A: There was no change in appearance.
B: Slight yellowing was observed in the appearance.
C: Significant yellowing was observed in the appearance.

| Table 1 | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|
| Synthetic leather | | (1) | (2) | (3) | (4) | (5) | (6) | (R1) | (R2) | (R3) | (R4) | (R5) |
| Aqueous urethane resin composition | | (1) | (2) | (3) | (4) | (5) | (6) | (R1) | (R2) | (R3) | (R4) | (R5) |
| Evaluation item | Peel strength | A | A | A | A | A | A | B | A | C | - | A |
| | Pot life | A | A | A | A | A | A | A | C | C | - | B |
| | Light resistance | A | A | A | A | A | A | C | A | A | - | C |

"-" in Comparative Example 4 in Table 1 indicates that emulsification is not possible and preparation is impossible.

Examples 1 to 6 shown in Table 1 are examples using the aqueous urethane resin composition of the present invention. It was confirmed that these aqueous urethane resin compositions had a long pot life and excellent peel strength and light resistance.

On the other hand, Comparative Example 1 shown in Table 1 is an example of an aqueous urethane resin composition using a urethane resin having a urea bond concentration exceeding 100 mmol/kg. It was confirmed that this aqueous urethane resin composition was significantly insufficient in light resistance.

Comparative Example 2 shown in Table 1 is an example of an aqueous urethane resin composition using a urethane resin in which no nonionic polyol is used as a raw material. It was confirmed that this aqueous urethane resin composition had a significantly insufficient pot life.

Comparative Example 3 shown in Table 1 is an example of an aqueous urethane resin composition in which no aromatic polyisocyanate compound is used as a raw material of the urethane resin. It was confirmed that this aqueous urethane resin composition was significantly insufficient in peel strength and pot life.

Comparative Example 4 shown in Table 1 is an example of an aqueous urethane resin composition in which the emulsifier (C) is not used. It was confirmed that this aqueous urethane resin composition could not be emulsified and could not be prepared.

Comparative Example 5 shown in Table 1 is an example of an aqueous urethane resin composition in which a urethane resin having a urea bond concentration exceeding 100 mmol/kg is used. It was confirmed that this aqueous urethane resin composition was significantly insufficient in light resistance.

## Claims

1. An aqueous urethane resin composition comprising:
a urethane resin (A); an aqueous medium (B); and an emulsifier (C), wherein
the urethane resin (A) contains, as essential raw materials, a polyol compound (a1) containing a nonionic polyol, and an aromatic polyisocyanate compound (a2), and
a urea bond concentration in the urethane resin (A) is 100 mmol/kg or less.

2. The aqueous urethane resin composition according to claim 1, wherein the aromatic polyisocyanate compound (a2) is toluene diisocyanate.

3. The aqueous urethane resin composition according to claim 1 or 2, wherein the emulsifier (C) contains an anionic emulsifier.

4. The aqueous urethane resin composition according to claim 1, wherein an amount of the emulsifier (C) used is 10 parts by mass or less per 100 parts by mass of the urethane resin (A).

5. A synthetic leather comprising at least a base fabric (i), an adhesive layer (ii), and a skin layer (iii) laminated, wherein
the adhesive layer (ii) is formed of the aqueous urethane resin composition according to any one of claims 1 to 4.

6. A method for producing the aqueous urethane resin composition according to any one of claims 1 to 5, wherein the urethane resin (A) is obtained by reacting raw materials containing the polyol compound (a1) and the aromatic polyisocyanate compound (a2) without solvent.
